# EUROPÄISCHE PATENTSCHRIFT

(11) **EP 1 123 487 B1**
(45) Veröffentlichungstag und Bekanntmachung des Hinweises auf die Patenterteilung: **12.10.2016**
(21) Anmeldenummer: 00971230.8
(22) Anmeldetag: 18.08.2000
(51) Int. Cl.: G01F 1/684

(54) **VORRICHTUNG ZUR MESSUNG DER MASSE EINES STRÖMENDEN MEDIUMS**
DEVICE FOR MEASURING THE MASS OF A FLOWING MEDIUM
DISPOSITIF POUR MESURER LA MASSE D'UN MILIEU EN ECOULEMENT

(30) Priorität: 21.08.1999 DE 19939824
(43) Veröffentlichungstag der Anmeldung: 16.08.2001
(73) Patentinhaber: ROBERT BOSCH GMBH, 70442 Stuttgart (DE)
(72) Erfinder: DODERER, Klaus, 75305 Neuenbürg (DE); HECHT, Hans, 70825 Korntal-Münchingen (DE); HUEFTLE, Gerhard, 71546 Aspach (DE); STROHRMANN, Manfred, 76137 Karlsruhe (DE); SCHARD, Rainer, 73730 Esslingen (DE); KONZELMANN, Uwe, 71679 Asperg (DE)
(86) Internationale Anmeldenummer: PCT/DE2000/002832
(87) Internationale Veröffentlichungsnummer: WO 2001/014833

(56) Entgegenhaltungen:
- WO-A-92/21940
- DE-A- 4 426 102
- DE-A- 19 524 634
- US-A- 5 948 975

## Beschreibung

### Stand der Technik

Die Erfindung geht aus von einer Vorrichtung zur Messung der Masse eines strömenden Mediums mit einem Sensorträger zur Aufnahme eines Meßelements bzw. von einem Verfahren zum Herstellen einer Vorrichtung zur Messung der Masse eines strömenden Mediums mit einem Sensorträger nach der Gattung des Anspruchs 1 bzw. der Ansprüche 20 oder 21.

Aus der DE 44 26 102 C2 bzw. US-PS 5,693,879 ist ein Sensorträger für ein Meßelement in einer Luftmassenmeßvorrichtung bekannt, wobei der Sensorträger mit dem Meßelement in einen Meßkanal hineinragt, in dem ein Medium strömt. Das Meßelement liefert ein Meßsignal, das zur Berechnung der Masse des strömenden Mediums dient.
Der Sensorträger besitzt eine Ausnehmung, in welche das Meßelement bündig eingebracht und mittels einer an einer Bodenfläche der Ausnehmung aufgebrachten Klebeschicht gehalten wird. Hierbei wird der Sensorträger dadurch hergestellt, daß aus einem Metallstreifen zunächst eine Öffnung ausgenommen wird, die in etwa der äußeren Form des Meßelements entspricht, danach der Metallstreifen um eine Biegeachse außerhalb der Ausnehmung gebogen und dann so zusammengepreßt wird, daß ein gebogener Teil des Metallstreifens ein Halteelement und ein nicht gebogener Teil des Metallstreifens mit der Öffnung ein Rahmenelement des Sensorträgers bildet. Das Halteelement bedeckt dabei die Öffnung des Rahmenelements und bildet mit diesem eine Ausnehmung. Danach werden durch weitere Umformungen des Halteelementes plateauförmige Erhebungen geschaffen, die als Abstandshalter oder Auflagefläche dienen. Das Meßelement wird dann in die Ausnehmung eingeklebt.

Es ist außerordentlich wichtig, daß das Meßelement mit seiner Oberfläche möglichst bündig zur Oberfläche des Sensorträgers in die Ausnehmung eingeklebt wird, da schon der kleinste Versatz, beispielsweise aufgrund einer ungleichmäßig aufgetragenen Klebeschicht, Wirbel und Ablösegebiete zur Folge hat, die insbesondere an der Oberfläche des Meßelements die Wärmeabfuhr des Meßwiderstandes nachteilig beeinflussen und das Meßergebnis verfälschen. Daher sind sehr geringe Maßtoleranzen der Ausnehmung vorzusehen, und beim Einkleben des Meßelements in die Ausnehmung des Sensorträgers ist äußerste Sorgfalt erforderlich, so daß insbesondere bei einer Massenherstellung der Vorrichtung ein hoher fertigungstechnischer Aufwand nötig ist, der erhebliche Produktionskosten verursacht.

Nachteilig sind die verschiedenen Arbeitsschritte zur Herstellung des Rahmen- und Halteelementes. Durch den Falzspalt zwischen Rahmen- und Halteelement kann zusätzlich das strömende Medium fließen. Dies ist jedoch nicht von Nachteil, da dieser Effekt durch Nullpunktmessung und Kalibrierung unterdrückt werden kann. Allerdings wird das Meßergebnis während der Lebensdauer des Meßelements verfälscht, wenn sich dieser Falzspalt mit Schmutz- und/oder Flüssigkeitspartikeln zusetzt und die Kalibrierung nicht mehr stimmt.

Nachteilig ist es, daß die Abstandshalter erst durch einen weiteren Formgebungsprozeß gebildet werden. Die Toleranz des Tiefenmaßes der Ausnehmung ist gegeben durch die Toleranz der Dicke des Metallstreifens und der Toleranz der Falzspaltdicke.

Nachteilig ist auch, daß aufgrund des strömenden, korrosiven Mediums eine Korrsosionsschutzschicht auf den Sensorträger, wie z.B. NiNiP, durch einen zusätzlichen, teuren Galvanikprozeß oder eine Beschichtungsmethode aufgebracht werden muß, die die Maßtoleranzen und die Produktionszeiten und -kosten weiter erhöht.

Bei einer derartigen freitragenden Befestigungsweise des Meßelements entsteht aufgrund von Toleranzen bei der Fertigung ein Spalt zwischen Meßelement und der Ausnehmung des Sensorträgers. Der Spalt kann so groß sein, daß es bei dem Meßelement zu einer unerwünschten Unterströmung des Hohlraumes unter seiner Membran in der Ausnehmung kommen kann, welche sich nachteilig auf das Meßergebnis der Vorrichtung auswirkt.

Es werden deshalb in der Literatur Vorrichtungen beschrieben, bei denen der störende Einfluß der Unterströmung reduziert werden kann.
Eine Umleitung der Strömung an einem speziell ausgeformten Rand des Meßelements, wie in der DE 195 24 634 A1 bzw. US-PS 5,723,784 beschrieben, verhindert, daß das über den Spalt einströmende Medium in einen Hohlraum unterhalb der Membran des Meßelements gelangen kann.

Ein Aufbringen von Klebenähten, wie in der DE 197 43 409 A1 beschrieben,
kann das Eindringen des Mediums in den Spalt um das Meßelement verhindern, um ungewollte Unterströmungen zu vermeiden. Nachteilig bei beiden Methoden ist, daß erst durch die spezielle Anordnung der Klebenähte oder durch zusätzliche Maßnahmen die Strömung um den Hohlraum umgelenkt wird, um die Auswirkungen der Fertigungstoleranzen auszugleichen.

Aus der DE 197 44 997 A1 ist eine Vorrichtung bekannt, die den Schutz der Bauteile einer Auswerteschaltung sowie der Verbindungsleitungen zu dem Kontaktierungsbereich des Meßelements gegenüber Feuchtigkeit mittels eines Gels ermöglicht und ein Verschmutzen des Sensorbereichs, also den Teil des Meßelements, wo sich eine Membran befindet, mit dem Gel verhindert wird. Dabei sind Erweiterungen eines Spalts, der zwischen Meßelement und den Wandungen der Ausnehmung verläuft, vorgesehen, um mittels der Erweiterungen ein Weiterfließen einer zumindest teilweise auf die Auswerteschaltung aufgebrachten Schutzschicht im Spalt zuverlässig zu stoppen, so daß der Fließweg der Schutzschicht stets eindeutig definiert bleibt. Hierbei ergeben sich die produktionstechnischen Nachteile, daß zusätzlich Spalte geschaffen werden müssen, wobei der Fluß des Gels nicht gestoppt, sondern nur definiert umgelenkt wird.

### Vorteile der Erfindung

Die erfindungsgemäße Vorrichtung, beziehungsweise die erfindungsgemäßen Verfahren, mit den kennzeichnenden Merkmalen des Anspruchs 1, beziehungsweise der Ansprüche 20 oder 21 haben demgegenüber den Vorteil, daß auf einfache Art und Weise eine Herstellung und ein Meßergebnis auch während längerer Betriebszeit verbessert wird, weil keine Unterströmung des Meßelements mehr stattfindet, da durch die Einengung der Toleranzen aufgrund der Verwendung von Kunststoff ein sehr präzises Setzen des Meßelements in die Sensorkaverne möglich ist. Durch die beliebigen Formgebungsmöglichkeiten des Kunststoffes lassen sich filigranere Formen und aerodynamische Forderungen wie z.B. die der Anströmkante berücksichtigen, die mit Metall nicht möglich sind. Da Kunststoff im Vergleich zu Metall nicht so stark korrodiert ist kein weiterer Korrosionsschutz notwendig.

Die fertigungsbedingte Beeinflussung des Meßergebnisses beim Stand der Technik infolge eines Luftstrom durch den offenen oder sich zusetzenden Falzspalt besteht nicht, und die Toleranz des Tiefenmaßes der Ausnehmung wird erfindungsgemäß nur durch die Toleranz des Formgebungswerkzeugs bestimmt und nicht mehr zusätzlich durch die Toleranz des Falzspaltes.

Durch die in den abhängigen Ansprüchen 2 bis 19 aufgeführten Maßnahmen bzw. in den abhängigen Ansprüchen 22 bis 32 aufgeführten Verfahrensschritte sind vorteilhafte Weiterbildungen und Verbesserungen der im Anspruch 1 angegebenen Vorrichtung bzw. des im Anspruch 21 angegebenen Verfahrens möglich.

Besonders vorteilhaft ist die Herstellung eines Blechrahmens als Blechelement und das Umspritzen des Blechrahmens, wobei der Blechrahmen während des Spritzvorganges im Formgebungswerkzeug festgehalten wird.
Dabei ist es von Vorteil, wenn der Kunststoff aus der Kunststoffklasse der Flüssigkristall-Polymere, oder teilkristalliner aromatischer Thermoplast verwendet wird.

Weiterhin ist es vorteilhaft, daß die Schottwand angespritzt wird, da dies eine Klebung zwischen Schottwand und Sensorträger erübrigt.

Bei der Montage ist es vorteilhaft, daß in die Aussparungen der Längskanten der Sensorkaverne eine Klebstoffraupe quer über den Sensorkavernenboden gelegt wird, die den Sensorbereich des Meßelementes in der Sensorkaverne vollständig abdichtet, und daß Vertiefungen im Randbereich des Sensorkavernenbodens angebracht sind, so daß das Meßelement genauer eingesetzt werden kann. Eine Verschmutzung des Meßelements durch einen zuverlässigen Stopp des Gels, das eine Auswerteschaltung vor Feuchtigkeit schützt, durch diese Klebstoffraupe wird verhindert.

Bei der Herstellung ist es vorteilhaft, den Kunststoff für das Kunststoffelement auf das Blechelement mittels Verfahren wie Wirbelsinterverfahren oder Tauchverfahren oder elektrostatisches Pulverspritzen aufzubringen und dann das Kunststoffelement zu formen.

### Zeichnung

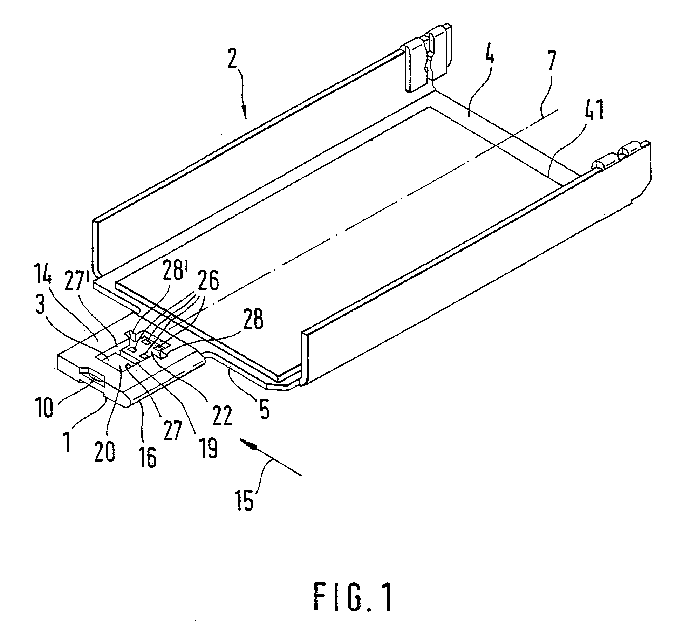

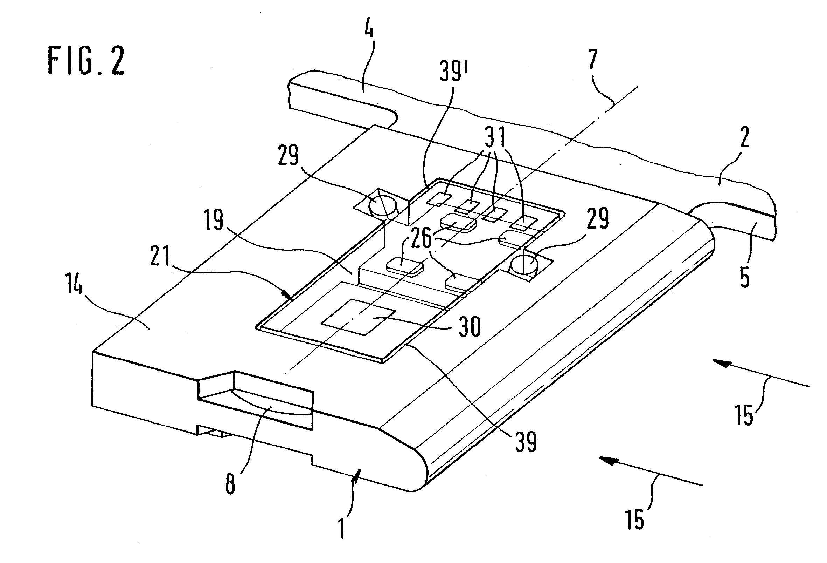

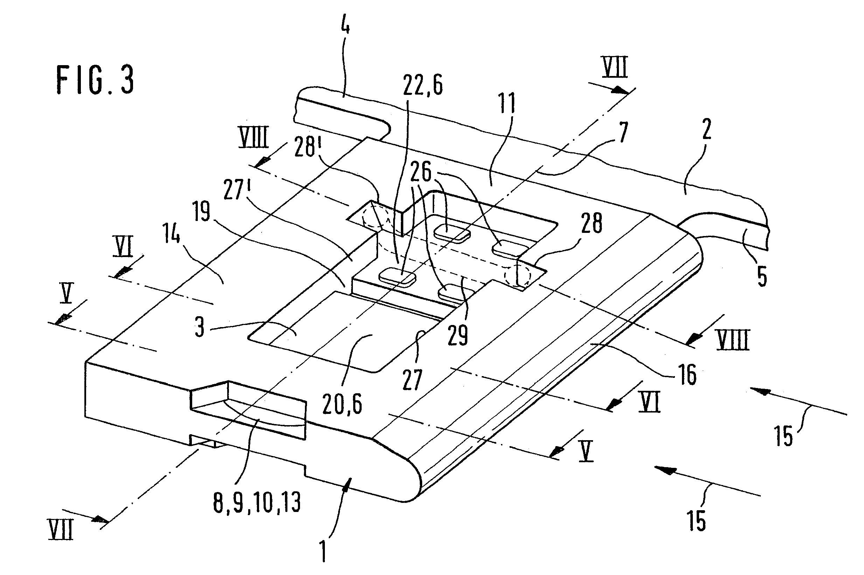

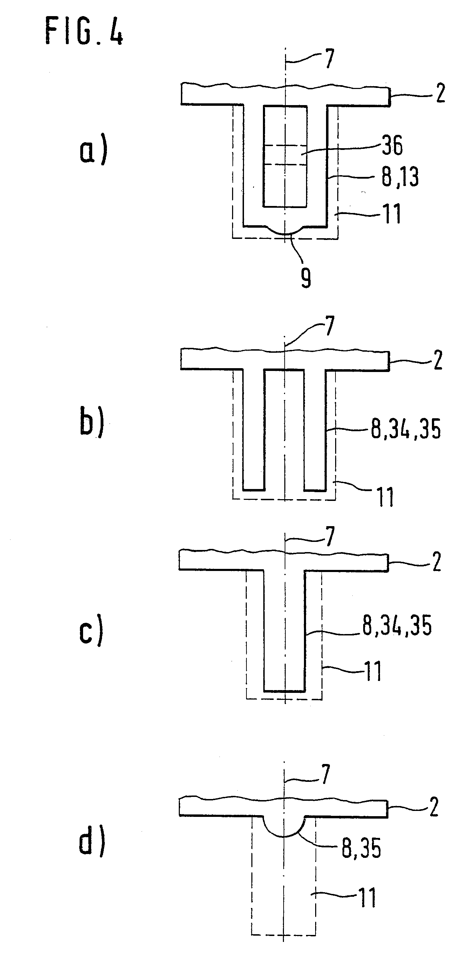

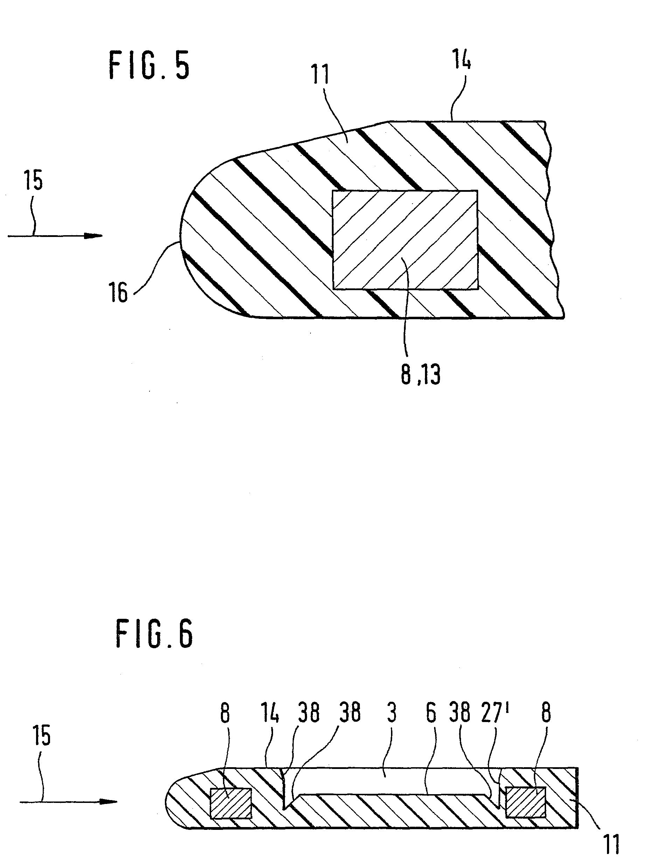

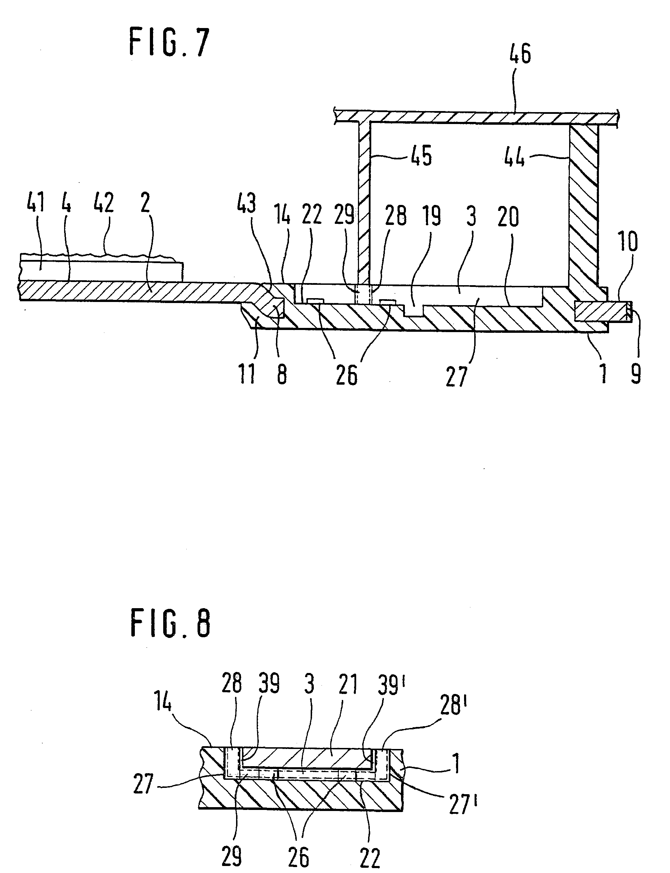

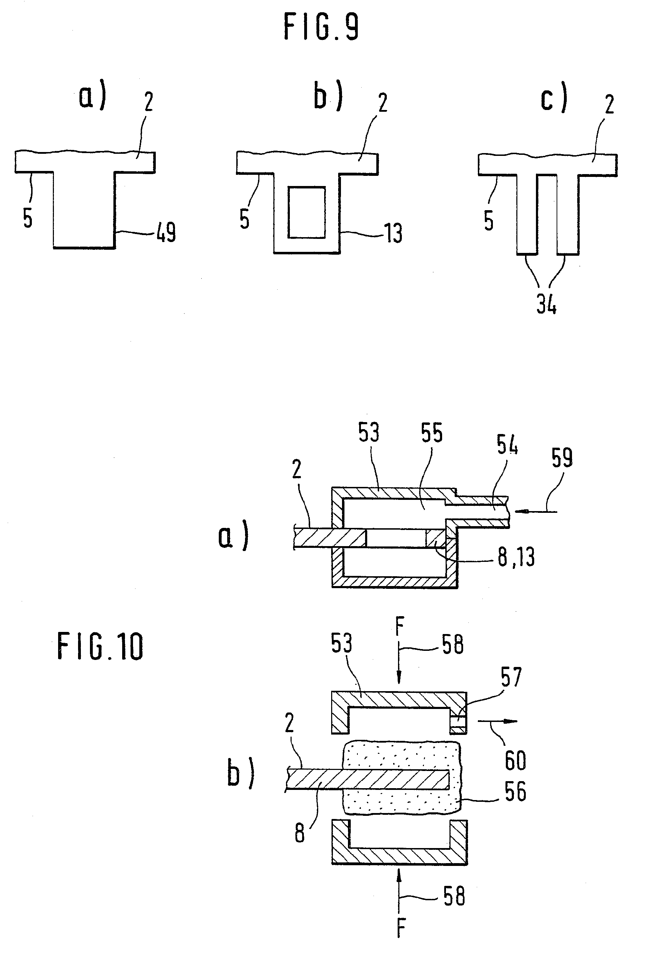

Mehrere Ausführungsbeispiele der Erfindung sind in der Zeichnung vereinfacht dargestellt und in der nachfolgenden Beschreibung näher erläutert. Es zeigen Fig. 1 einen Grundträger mit einem erfindungsgemäß ausgebildeten Sensorträger, Fig. 2 den Sensorträger mit eingebautem Meßelement, Fig. 3 den Sensorträger, Fig. 4a-d vier Varianten des Blechelements für den Sensorträger, Fig. 5 einen Schnitt entlang der Linie V-V in Fig. 3, Fig. 6 einen Schnitt entlang der Linie VI-VI in Fig. 3, mit Vertiefungen im Randbereich des Sensorkavernenbodens, Fig. 7 einen Schnitt entlang der Linie VII-VII in Fig. 3, mit einer Schottwand, Fig. 8 einen Schnitt entlang der LinieVIII-VIII in Fig. 3, mit einem Meßelement, Fig. 9 a-c Verfahrensschritte des Herstellungsprozesses des Blechrahmens oder von Stiften und Fig. 10 a,b zwei Möglichkeiten zur Kunststoffbeschichtung des Blechelements.

### Beschreibung der Ausführungsbeispiele

Der Sensorträger ist Teil einer dem Fachmann aus der DE 197 41 031 A1 bekannten Luftmassenmeßvorrichtung, die Teil dieser Offenbarung sein soll.

Fig. 1 zeigt einen Sensorträger 1 und einen Grundträger 2, der mit dem Sensorträger 1 verbunden ist. Der Grundträger 2 und der Einbau in die Luftmassenmeßvorrichtung ist aus der DE 44 26 102 C2 bzw. US-PS 5,693,879 bekannt, die Teil dieser Offenbarung sein sollen.
Der Sensorträger 1 hat eine Oberfläche 14, die bspw. auf derselben Höhe wie ein Boden 4 des Grundträgers 2, also fluchtend zu diesem liegt und in der eine bspw. rechteckförmige Sensorkaverne 3 ausgespart ist. Der Grundträger 2 und der Sensorträger 1 haben eine Längsachse 7. In oder auf dem Grundträger 2 befindet sich eine elektronische Auswerteschaltung 41 mit einem darauf aufgebrachten Schutzgel 42.

Fig. 2 zeigt den Sensorträger 1 mit einem eingebautem Meßelement 21. Das Meßelement 21 ist in der Figur 2 schematisch sowie durchsichtig zum Teil gezeichnet und hat auf einer nach außen gewandten Oberfläche eine Membran 30, die den Sensorbereich bildet. Auf der selben Oberfläche am anderen Ende des Meßelements 21 befinden sich Kontakte 31, die die elektrische Verbindung zur elektronischen Auswerteschaltung 41 herstellen. Der Aufbau des Meßelements 21 und die Beschreibung des Sensorbereichs ist in DE 197 43 409 oder DE 43 38 891 A1 bzw. US-PS 5,452,610 näher erläutert, die Teil dieser Offenbarung sein sollen.
Das Meßelement 21 ist in der Sensorkaverne 3 so angeordnet, daß die Kontakte 31 dem Grundträger am nächsten sind. Das Meßelement 21 ist hier bspw. plättchenförmig ausgebildet und ist bündig mit der Sensorkaverne 3. Die Sensorkaverne 3 und das Meßelement 21 bilden einen Spalt 39. Das Meßelement 21 und die Oberfläche 14 des Sensorträgers 1 schließen hier bspw. bündig ab.

Fig. 3 zeigt den Sensorträger 1 und eine Kante 5 des Grundträgers 2 in gegenüber Fig. 1 vergrößerter Darstellung. Der Sensorträger 1 besteht aus einem Blechelement 8 und einem Kunststoffelement 11. Zur Herstellung des Kunststoffelements 11 ist das Blechelement 8 mit Kunststoff bspw. umspritzt worden, der das Blechelement 8 fast vollständig abdeckt. Während des Spritzvorgangs zur Herstellung des Kunststoffelements 11 wird das Blechelement 8 an einer Stirnseite 9 an einer Haltefläche 10 durch Elemente eines Formgebungswerkzeugs 53 (Fig. 10) festgehalten. Dies verhindert ein Verbiegen des Blechelementes 8, hier in Form eines Blechrahmens 13 (Fig. 4a) und ermöglicht eine gleichmäßige Verteilung des Kunststoffes um das Blechelement 8. Deshalb ist ein Teil des Blechrahmens 10, 13 frei von Kunststoff.
Das Medium strömt in Richtung der Pfeile 15 an dem Sensorträger 1 vorbei. Dabei trifft es auf eine Anströmkante 16 des Sensorträgers 1, die aufgrund der Verwendung von Kunststoff bspw. besonders filigran und aerodynamisch ausgeformt ist.
Auf der Oberfläche 14 befindet sich die Sensorkaverne 3 mit einem Sensorkavernenboden 6. Der Sensorkavernenboden 6 bildet ein Halteelement, wobei Kanten der Sensorkaverne 3 ein Rahmenelement bilden.
Der Sensorkavernenboden 6 ist durch einen Klebstoffverdrängungsraum 19 in eine Sensorgrundfläche 20 und eine Auflagefläche 22 geteilt. Die Sensorgrundfläche 20 ist am weitesten von dem Grundträger 2 entfernt und liegt unter dem Sensorbereich des Meßelements 21. Die Auflagefläche 22 ist dem Grundträger 2 am nächsten.
Der Klebstoffverdrängungsraum 19 ist hier bspw. ein durchgehender Kanal von einer Längskante 27 zur gegenüberliegenden Längskante 27' der Sensorkaverne 3. Die Längskanten 27, 27' verlaufen parallel zur Längsachse 7. Der Klebstoffverdrängungsraum 19 kann jedoch auch nicht durchgehend, d.h. kürzer ausgebildet sein. Der Klebstoffverdrängungsraum 19 zwischen Sensorgrundfläche 20 und Auflagefläche 22 kann auch bspw. durch zumindest zwei Vertiefungen in dem Sensorkavernenboden 6 gebildet werden.
In der Auflagefläche 22 befinden sich bspw. vier Abstandshalter 26 auf denen das Meßelement 21 aufliegt. Die Abstandshalter 26 sind bspw. plateauförmig ausgebildet. In den Längskanten 27, 27' ist bspw. je eine Aussparung 28, 28' ausgebildet. Von der Aussparung 28 quer über die Auflagefläche 22 zu der anderen Aussparung 28' wird für den Klebeprozeß eine Kleberaupe 29, die gestrichelt gezeichnet ist, aufgebracht. Nach Einbringen des Meßelements 21 in die Sensorkaverne 3 wird die Sensorgrundfläche 20 durch die Kleberaupe 29 vollständig vor einem Sensorgel, das auf einer elektronischen Auswerteschaltung aufgebracht ist und in ungewollter Weise in Richtung der Membran 30 kriecht, geschützt.

Das Meßelement 21 liegt nach der Montage bspw. zum Teil in der Sensorkaverne 3 und liegt bspw. auf den Abstandshaltern 26 auf. Dabei ist das Meßelement 21 bspw. mit der Auflagefläche 22 mittels der Klebstoffraupe 29 verklebt und schließt entlang seines Umfanges auf Höhe der Oberfläche 14 bündig mit der Sensorkaverne 3 ab, so daß das Medium kaum oder gar nicht unter das Meßelement 21 in die Sensorkaverne 3 einströmt. Ein Spalt 39 (Fig. 2, 8) zwischen Meßelement 21 und der Längskante 27 der Sensorkaverne 3 hat bspw. eine Größenordnung von wenigen Mikrometern.
Eine Tiefe der Sensorkaverne 3 und die Kanten der Sensorkaverne 3 sind bspw. so ausgeformt, daß ein bspw.
plättchenförmiges Meßelement 21 bündig zur Oberfläche 14 eingebracht werden kann. Die Tiefenmaße im Bereich der Auflagefläche 22 des Meßelements 21 ausgehend von der Oberfläche 14 werden generell mit +/- 10 Mikrometer toleriert.

Der Sensorträger 1 ist hier so geformt, daß die Oberfläche 14 und die dieser gegenüberliegende Fläche planparallel zueinander und so zur Hauptströmungsrichtung 15 ausgerichtet sind, daß ein Vektor der Hauptströmungsrichtung 15 in der Ebene des Sensorbereichs des Meßelements 21 liegt.

Der Vektor der Hauptströmungsrichtung 15 kann die Ebene des Sensorbereichs unter einen kleinen positiven oder negativen Winkel schneiden. Dies wird bspw. durch eine Verdrehung der Oberfläche 14 gegenüber dem Boden 4 erreicht. Eine weitere Möglichkeit ist es, daß ein Querschnitt des Sensorträgers 1 senkrecht zur Oberfläche 14 keilförmig ausgebildet ist, wobei das dünnere Ende des Keils im Bereich der Anströmkante 16 liegt und der Vektor der Hauptströmungsrichtung 15 nicht in der Oberfläche 14 liegt.

Fig. 4 zeigt verschiedene Möglichkeiten, wie das Blechelement 8, das mit dem Grundträger 2 verbunden ist, geformt sein kann. Das Kunststoffelement 11 ist hier gestrichelt angedeutet. Fig. 4a zeigt einen Blechrahmen 13 mit einer die Halteflächen 10 bildende Lasche an der Stirnseite 9, wie es auch in Fig. 3 zum Teil zu sehen ist. Der Blechrahmen 13 kann auch zumindest einen Steg 36 haben, der in Fig.4a gestrichelt angedeutet ist. Fig. 4b zeigt ein weiteres Ausführungsbeispiel des Blechelements 8 in Form von zwei Stiften 34. Gemäß Fig. 4c ist das Blechelement 8 als ein Stift 34 ausgebildet. Der Blechrahmen 13 in Fig. 4a und Vorsprünge 35 in Form von Stiften 34 (Fig. 4b,c) können so lang ausgebildet sein, daß sie während einer Kunststoffauftragung und/oder bei einem Formgebungsprozeß im Bereich der Stirnseite 9 festgehalten werden können. Die Vorsprünge 35 in Fig. 4b,c sind bspw. durch Schneiden mittels eines Lasers hergestellt worden.
Fig. 4d zeigt einen Vorsprung 35, der deutlich kürzer als die Länge des Kunststoffelements 11 entlang der Längsachse 7 ist, mit dem das Kunststoffelement 11 aber trotzdem verbunden werden kann.

Fig. 5 zeigt einen Schnitt entlang der Linie V-V in Fig. 3. Zu erkennen ist die aerodynamisch geformte Anströmkante 16 des Kunststoffelements 11, das von dem Medium aus der Richtung 15 angeströmt wird, und ein Teil des Blechelements 8, hier eines Blechrahmens 13. Zu erkennen ist weiterhin, daß nicht nur die Anströmkante 16, sondern auch bspw. ein Teil der Oberfläche 14 aerodynamisch geformt ist, in dem sie bspw. zur Anströmkante 16 abgeflacht ist.

Fig. 6 zeigt einen Schnitt entlang der Linie VI-VI in Fig. 3. Entlang des Randbereiches des Sensorkavernenbodens 6 der Sensorkaverne 3 bspw. entlang der Längskanten 27, 27' befinden sich bspw. Vertiefungen 38 in dem Kunststoffelement 11. Die Vertiefung 38 ist hier bspw. durch eine Abschrägung des Sensorkavernenbodens 6 zur Längskante 27 gebildet.
Diese Vertiefungen 38 erscheinen bei Hellfeldbeleuchtung eines Bildverarbeitungssystems, das zur Montage des Meßelements 21 in die Sensorkaverne 3 dient, dunkel und stellen so einen besseren Kontrast dar. Dadurch kann das Meßelement 21 bei der Montage sehr präzise geführt werden. Es sind so sehr enge Spalte 39 (Fig. 2) zwischen Meßelement 21 und Sensorträger 1 sowie reproduzierbare Strömungsverhältnisse erreichbar.
Vorzugsweise ist eine vollständig umlaufende Abschrägung auch an einer Kante auf Höhe der Oberfläche 14 vorhanden. Sie bildet neben der präziseren Montage eine Einfuhrschräge bei einer Montage des Meßelements 21 als auch eine definiertere Anströmung des Meßelements 21, da rechtwinklige Kanten oft Graten bilden und zu Streuungen im Meßkennlinienverhalten führen.

Fig. 7 zeigt einen Schnitt entlang der Linie VII-VII in Fig. 3. Es ist zu erkennen, daß sich in Nähe einer senkrecht zur Zeichnungsebene verlaufende Linie 43 zwischen Grundträger 2 und Blechelement 8 bspw. eine Biegezone befindet. Die Oberflächen des Blechelements 8 und des Grundträgers 2 verlaufen jetzt versetzt aber nahezu parallel zueinander. Ebenso verlaufen die Oberflächen des Kunststoffelements 11 und des Grundträgers 2 jetzt versetzt aber nahezu parallel zueinander. Die Oberfläche 14 des Kunststoffelements 11 kann bspw. auf nahezu gleicher Höhe wie der Boden 4 des Grundträgers 2 liegen.
Im Bereich der Stirnseite 9 des Sensorträgers 1, aber von der Stirnseite 9 aus gesehen nach der Haltefläche 10 ist bspw. eine Schottwand 44 an den Sensorträger 1 angespritzt. Dies erübrigt eine Klebung der Schottwand 44, die ansonsten an einem Deckel 46 befestigt ist, auf den Sensorträger 1. Die Schottwand 44 verläuft ungefähr in Strömungsrichtung 15. Außerdem ist zwischen der Auswerteschaltung 41 und dem Meßelement 21 eine Trennwand 45 vorgesehen, wobei die Trennwand 45 sich bis zur Oberfläche 14 erstreckt. Die Trennwand 45 verläuft ungefähr in Strömungsrichtung 15. Der Deckel 46 ist ein Teil der Vorrichtung und schließt einen Bypasskanal der Vorrichtung, durch den das Medium zum Meßelement 21 strömt. Die Schottwand 44 und die Trennwand 45 begrenzen zumindest teilweise den Bypasskanal. Die Trennwand in Verbindung mit dem Deckel 46 ermöglicht es, den Sensorbereich vor dem Schutzgel 42 der Auswerteschaltung 41 sicher zu schützen.
Die Aussparung 28 in der Längskante 27 befindet sich bspw. dort, wo die Trennwand 45, die an dem Deckel 46 befestigt ist, nach dem Einsetzen des Deckels 46 in die Vorrichtung verläuft. Dort ist auch bspw. die Klebstoffraupe 29 auf der Auflagefläche 22 eingebracht.
Bei der Montage des Meßelements 21 in die Sensorkaverne 3 kann Klebstoff in den bspw. vorhandenen Klebstoffverdrängungsraum 19 verdrängt werden, so daß er nicht in den Bereich der Sensorgrundfläche 20 gelangt.

Fig. 8 zeigt einen Schnitt entlang der Linie VIII-VIII in Fig. 3 durch den Sensorträger 1 mit eingelegtem Meßelement 21 und Kleberaupe 29 (gestrichelt angedeutet). Die Kleberaupe 29 wurde bspw. von der Aussparung 28 an der Längskante 27 über die Auflagefläche 22 zu der Aussparung 28' an der Längskante 27' gelegt. Nach dem Einsetzen des Meßelements 21 in die Sensorkaverne 3 wird bspw. Klebstoff in den Klebstoffverdrängungsraum 19 und durch die Spalten 39, 39' nach außen gedrängt und reicht bis zur Oberfläche 14. Der Klebstoff schließt den Spalt 39 zwischen Meßelement 21 und Sensorkaverne 3 an der einen Längskante 27 durchgehend unter dem Meßelement 21 zu der anderen Längskante 27' und den Spalt 39' vollständig, so daß eine Verschmutzung des Meßelements 21 mit seiner Membran 30 durch einen zuverlässigen Stopp des kriechenden Schutzgels 42 der Auswerteschaltung 41 verhindert wird.

Fig. 9a zeigt einen Metallstreifen 49, der von der Kante 5 des Grundträgers 2 absteht, vor seiner Weiterverarbeitung. Es wird bspw. durch Ausstanzen einer Öffnung aus dem Metallstreifen 49 das Blechelement 8 in Form eines Blechrahmens 13 (Fig. 9b) oder zweier Stifte 34 (Fig. 9c) hergestellt. Der Blechrahmen 13 oder der/die Stift/Stifte 34 können wie in Fig. 7 gezeigt verbogen werden.

Nachdem eine nach Fig. 9 oder eine andere Ausführung des Blechelements 8 hergestellt worden ist, der Grundträger schon gefertigt ist, und das Blechelement 8 bspw. wie in Fig. 7 gezeigt verbogen worden ist, wird das Kunststoffelement 11auf das Blechelement 8 aufgebracht. Die Verbiegung des Metallstreifens 49 kann auch vor der Bearbeitung des Metallstreifens nach Fig. 9 erfolgen.

In Fig. 10 a ist bspw. schematisch gezeigt, wie sich das Blechelement 8, hier bspw. ein Blechrahmen 13, in dem Formgebungswerkzeug 53 befindet, welches das Blechelement bis auf eine Öffnung 54 vollständig umschließt. Durch die Öffnung 54 wird bspw. durch Einspritzen von bspw. thermoplastischen Kunststoff mittels bekannter Kunststoffspritzverfahren in den Hohlraum 55, gekennzeichnet durch den Pfeil 59, das Kunststoffelement 11 und die Verbindung mit dem Blechelement 8 gebildet. Das Blechelement 8 wird hier nicht festgehalten.
In Fig. 10b ist der Kunststoff 56 schon auf dem Blechelement 8 mittels einem geeignetem Verfahren, wie z.B. einem Wirbelsinterverfahren, einem Tauchverfahren oder einem elektrostatischen Pulverspritzen o.ä., aufgebracht. Dann wird das Formgebungswerkzeug 53 mit einer Kraft F in Richtung 58 zusammengedrückt, wobei überschüssiger, noch verformbarer, bspw. thermoplastischer Kunststoff 56 aus der Öffnung 57 in Richtung 60 nach außen dringt.
Alternativ kann das Kunststoffelement 11 auch vorgefertigt sein und einfach mit dem Blechelement 8 durch Klebung oder Verschweißen verbunden werden, wobei das Kunststoffelement 11 vorher auf das Blechelement 8 aufgeschoben oder aufgelegt worden ist.

## Patentansprüche

1. Vorrichtung zur Messung der Masse eines strömenden Mediums, insbesondere der Ansaugluftmasse von Brennkraftmaschinen, mit einem Sensorträger (1), der ein mit einem Grundträger (2) verbundenes Blechelement (8) aufweist und an dem ein in das strömende Medium eingebrachtes Meßelement (21) angeordnet ist, **dadurch gekennzeichnet, daß** zur Bildung des Sensorträgers (1) das Blechelement (8) vollständig oder teilweise mit einem Kunststoffelement (11) ummantelt ist und das Kunststoffelement (11) das Blechelement (8) zumindest größtenteils abdeckt.

2. Vorrichtung nach Anspruch 1, **dadurch gekennzeichnet, daß** das Blechelement (8) die Form eines Rahmens (13) hat und daß eine vom Blechrahmen (13) eingeschlossene Fläche zumindest größtenteils durch das Kunststoffelement (11) geschlossen ist.

3. Vorrichtung nach Anspruch 1, **dadurch gekennzeichnet, daß** das Blechelement (8) aus zumindest einem Vorsprung (35) besteht.

4. Vorrichtung nach einem der Ansprüche 1 bis 3, **dadurch gekennzeichnet, daß** der Sensorträger (1) eine aerodynamisch geformte, dem strömenden Medium entgegengerichtete Anströmkante (16) aus Kunststoff hat.

5. Vorrichtung nach einem der Ansprüche 1 bis 4, **dadurch gekennzeichnet, daß** in dem Kunststoffelement (11) eine Sensorkaverne (3) mit einem Sensorkavernenboden (6) vorgesehen ist, in der das Meßelement (21) angeordnet ist, wobei die Sensorkaverne (3) ein Rahmen- und Halteelement für das Meßelement (21) bildet.

6. Vorrichtung nach einem der Ansprüche 1 bis 5, **dadurch gekennzeichnet, daß** der Sensorträger (1) so geformt oder so zu einer Hauptströmungsrichtung (15) des strömenden Mediums ausgerichtet ist, daß ein Vektor der Hauptströmungsrichtung (15) in der Ebene eines Sensorbereichs des Meßelements (21) liegt oder unter einem kleinen positiven oder negativen Winkel die Ebene des Sensorbereichs schneidet.

7. Vorrichtung nach Anspruch 5 oder 6, **dadurch gekennzeichnet, daß** eine Oberfläche (14) des Kunststoffelements (11), in der sich die Sensorkaverne (3) befindet, ungefähr auf gleicher Höhe wie der Boden (4) des Grundträgers (2) liegt.

8. Vorrichtung nach Anspruch 5 oder 7, **dadurch gekennzeichnet, daß** die Sensorkaverne (3) in ihren Abmessungen auf Höhe der Oberfläche (14) des Kunststoffelements (11) ungefähr den Abmessungen des Meßelements (21) entspricht, so daß das Meßelement (21) bündig in die Sensorkaverne (3) einbringbar ist und das Medium kaum oder gar nicht unter das Meßelement (21) in die Sensorkaverne einströmt.

9. Vorrichtung nach Anspruch 8, **dadurch gekennzeichnet, daß** die Sensorkaverne (3) zwei gegenüberliegende Längskanten (27, 27') hat und zwischen dem Umfang des Meßelements (21) und den Längskanten (27, 27') ein Spalt (39,39') gebildet wird, der eine Größenordnung von wenigen Mikrometern hat.

10. Vorrichtung nach Anspruch 8 oder 9, **dadurch gekennzeichnet, daß** die Sensorkaverne (3) in ihren Abmessungen ungefähr den Abmessungen des Meßelements (21) entspricht, so daß das Meßelement (21) bündig zu der Oberfläche (14) des Kunststoffelements (11) liegt.

11. Vorrichtung nach einem oder mehreren der Ansprüche 8 bis 10, **dadurch gekennzeichnet, daß** auf der Oberfläche (14) des Kunststoffelements (11) außerhalb der Sensorkaverne (3) im Bereich einer Stirnseite (9) des Sensorträgers (1) eine Schottwand (44) angebracht ist.

12. Vorrichtung nach einem oder mehreren der Ansprüche 8 bis 11, **dadurch gekennzeichnet, daß** in einem Randbereich des Sensorkavernenbodens (6) Vertiefungen (38) eingebracht sind.

13. Vorrichtung nach einem oder mehreren der Ansprüche 8 bis 12, **dadurch gekennzeichnet, daß** das Meßelement (21) an den Sensorkavernenboden (6) geklebt ist.

14. Vorrichtung nach Anspruch 13, **dadurch gekennzeichnet, daß** in dem Sensorkavernenboden (6) zumindest ein Klebstoffverdrängungsraum (19) in Form eines Kanals ausgebildet ist, der in Richtung von einer zur Anströmkante (16) des Sensorträgers (1) parallel verlaufenden Längskante (27) des Sensorkavernenbodens (6) zu einer gegenüberliegenden Längskante (27') verläuft, in den beim Einsetzen des Meßelements (21) in die Sensorkaverne (3) des Sensorträgers (1) in der Sensorkaverne (3) eingebrachter Klebstoff ausweichen kann, und der den Sensorkavernenboden (6) in eine Auflagefläche (22), auf die der Klebstoff aufgebracht wird, und in eine Sensorgrundfläche (20), die unter einer Membran (30) des Meßelements (21) liegt, teilt.

15. Vorrichtung nach Anspruch 13 oder 14, **dadurch gekennzeichnet, daß** in den zwei gegenüberliegenden zur Anströmkante (16) des Sensorträgers (1) parallel oder leicht geneigt verlaufenden Längskanten (27, 27') der Sensorkaverne (3) im Bereich der Auflagefläche (22) je eine Aussparung (28, 28') gefertigt ist, durch die eine darin aufgetragene Klebstoffraupe (29) beim Einsetzen des Meßelements (21) in die Sensorkaverne (3) herausgedrückt wird, so daß ein Spalt (39) zwischen dem Meßelement (21) und der Sensorkaverne (3) an der einen Längskante (27), ein sich daran anschließender Spalt zwischen Meßelement (21) und Auflagefläche (22) und ein sich daran anschließenden Spalt (39') an der anderen Längskante (27') durch einen Klebstoff der Klebstoffraupe (29) vollständig geschlossen wird.

16. Vorrichtung nach Anspruch 15, **dadurch gekennzeichnet, daß** die Vorrichtung einen Deckel (46) hat, mit dem eine Trennwand (45) verbunden ist, die sich mit einem freien Ende bis zur Oberfläche (14) des Kunststoffelements (11) erstreckt und die Aussparungen (28, 28') in den Längskanten (27, 27') der Sensorkaverne (3) in Richtung der Trennwand (45) verlaufen und von dieser zumindest teilweise überdeckt werden.

17. Vorrichtung nach einem oder mehreren der Ansprüche 8 bis 16, **dadurch gekennzeichnet, daß** in dem Sensorkavernenboden (6) der Sensorkaverne (3) ein oder mehrere Abstandshalter (26) in Form von Erhebungen vorgesehen sind.

18. Vorrichtung nach Anspruch 17, **dadurch gekennzeichnet, daß** ein oder mehrere Abstandshalter (26) in Form von Erhebungen in dem Bereich der Auflagefläche (22) und/oder der Sensorgrundfläche (20) vorgesehen sind.

19. Vorrichtung nach einem oder mehreren der vorherigen Ansprüche, **dadurch gekennzeichnet, daß** als Kunststoff für das Kunststoffelement 11 aus der Kunststoffklasse der Flüssigkristall-Polymere, oder teilkristalliner aromatischer Thermoplast verwendet wird.

20. Verfahren zur Herstellung einer Vorrichtung zur Messung der Masse eines strömenden Mediums, insbesondere der Ansaugluftmasse von Brennkraftmaschinen, mit einem Sensorträger (1), der ein mit einem Grundträger (2) verbundenes Blechelement (8) aufweist und an dem ein in das strömende Medium eingebrachtes Meßelement (21) angeordnet ist, insbesondere nach einem oder mehreren der Ansprüche 1 bis 19, **dadurch gekennzeichnet, daß** zunächst der Grundträger (2) mit einem von einer Kante (5) hervorstehenden Metallstreifen (49) hergestellt wird, dann in einem der folgenden Verfahrensschritte der von der Kante (5) des Grundträgers (2) hervorstehende Metallstreifen (49) zur Bildung des Blechelements (8) bearbeitet wird, dann in einem der folgenden Verfahrensschritte zur Ausbildung des Sensorträgers (1) das Blechelement (8) vollständig oder teilweise mit einem Kunststoffelement (11) ummantelt wird.

21. Verfahren nach Anspruch 20, **dadurch gekennzeichnet, daß** als ein Verfahrensschritt zur Bearbeitung des Metallstreifens (49) der Metallstreifen (49) so bearbeitet wird, daß zur Bildung des Blechelements (8) in Form eines Blechrahmens (13) zumindest eine Öffnung ausgenommen wird.

22. Verfahren nach Anspruch 20, **dadurch gekennzeichnet, daß** als ein Verfahrensschritt zur Bearbeitung des Metallstreifens (49) der Metallstreifen (49) so bearbeitet wird, daß wenigstens ein von dem Grundträger (2) hervorstehender Vorsprung (35) entsteht.

23. Verfahren nach einem der Ansprüche 20 bis 22, **dadurch gekennzeichnet, daß** als ein Verfahrensschritt zur Bearbeitung des Metallstreifens (49) der Metallstreifen (49) oder das Blechelement (8, 13, 34, 35) entlang einer vorbestimmten Linie (43) des Grundträgers (2) so verbogen wird, daß die Oberflächen eines Bodens (4) des Grundträgers (2) und des Blechelements (8, 13, 34, 35) zueinander versetzt sind und außerhalb der Biegezone parallel zueinander verlaufen, und das Kunststoffelement (11) so angebracht wird, daß eine Oberfläche (14) des Kunststoffelements (11) auf nahezu gleicher Höhe mit der Oberfläche des Bodens (4) liegt.

24. Verfahren nach Anspruch 20 **dadurch gekennzeichnet, daß** als ein Verfahrensschritt zur Herstellung des Kunststoffelements (11) und der Verbindung zwischen Kunststoffelement (11) und Blechelement (8,13,34,35) ein Kunststoff durch ein entsprechendes Verfahren auf dem Blechelement (8,13, 34, 35) so aufgebracht wird, daß er nach der Aufbringung mit dem Blechelement (8,13,34,35) verbunden ist, dann das Blechelement (8) in ein Formgebungswerkzeug (53) eingelegt wird und der Kunststoff plastisch in die Form des Kunststoffelements (11) verformt wird, abschließend der aus Blechelement (8,13, 34, 35) und Kunststoffelement (11) gebildete Sensorträger (1) aus dem Formgebungswerkzeug (53) entfernt wird.

25. Verfahren nach Anspruch 20, **dadurch gekennzeichnet, daß** als ein Verfahrensschritt zur Herstellung des Kunststoffelements (11) und der Verbindung zwischen Kunststoffelement (11) und Blechelement (13) das Blechelement (8) in ein Formgebungswerkzeug (53) eingelegt wird, dann Kunststoff durch ein entsprechendes Verfahren in das Formgebungswerkzeug (53) eingebracht und so zum einen mit dem Blechelement (8 ,13, 34, 35) verbunden und zum anderen mittels dem Formgebungswerkzeug (53) in die Form des Kunststoffelements (11) geformt wird, abschließend der aus Blechelement (8,13, 34, 35) und Kunststoffelement (11) gebildete Sensorträger (1) aus dem Formgebungswerkzeug (53) entfernt wird.

26. Verfahren nach Anspruch 20, **dadurch gekennzeichnet, daß** als ein Verfahrensschritt zur Herstellung des Kunststoffelements (11) und der Verbindung zwischen Kunststoffelement (11) und Blechelement (8, 13, 34, 35) das Kunststoffelement (11) mit einer Ausnehmung im Innern gefertigt wird, dann das Blechelement (8, 13, 34, 35) in die Ausnehmung geschoben wird, dann das Kunststoffelement (11) und das Blechelement (8, 13, 34, 35) mittels eines Klebstoffs oder thermoplastische Verformung miteinander verbunden werden.

27. Verfahren nach Anspruch 20, **dadurch gekennzeichnet, daß** als ein Verfahrensschritt zur Herstellung des Kunststoffelements (11) und der Verbindung zwischen Kunststoffelement (11) und Blechelement (13) das Kunststoffelement (11) gefertigt wird, dann das Kunststoffelement (11) mit einer Oberfläche (14) auf das Blechelement (8, 13, 34, 35) gelegt wird, und dann mit diesem verklebt oder durch thermoplastische Verformung verbunden wird.

28. Verfahren nach Anspruch 24, **dadurch gekennzeichnet, daß** zum Aufbringen des Kunststoffes (56) auf das Blechelement (8, 13, 34, 35) Verfahren wie Wirbelsinterverfahren oder Tauchverfahren oder elektrostatisches Pulverspritzen verwendet werden.

29. Verfahren nach Anspruch 25, **dadurch gekennzeichnet, daß** zur Kunststoffeinbringung in das Formgebungswerkzeug (53) ein Kunststoffspritzverfahren verwendet wird.

30. Verfahren nach Anspruch 24 oder 25, **dadurch gekennzeichnet, daß** das Blechelement (8, 13, 34, 35) an zumindest einer Haltefläche (10) durch zumindest einen Stempel zur Vermeidung einer Verbiegung während der Auftragung von Kunststoff oder der Formgebung des Kunststoffelements (11) gehalten wird.

31. Verfahren nach einem oder mehreren der Ansprüche 24 bis 30, **dadurch gekennzeichnet, daß** eine Schottwand (44) während der Formgebung des Kunststoffelements (11) hergestellt oder in einem zusätzlichen Arbeitsschritt an diesem angebracht wird.

## Claims

1. Device for measuring the mass of a flowing medium, in particular the intake air mass of internal combustion engines, having a sensor carrier (1), which has a sheet metal element (8) connected to a basic carrier part (2) and on which there is arranged a measuring element (21) introduced into the flowing medium, **characterized in that** in order to form the sensor carrier (1), the sheet metal element (8) is completely or partly sheathed with a plastic element (11), and the plastic element (11) at least mostly covers the sheet metal element (8).

2. Device according to Claim 1, **characterized in that** the sheet metal element (8) has the form of a frame (13), and **in that** an area enclosed by the sheet metal frame (13) is at least mostly closed by the plastic element (11).

3. Device according to Claim 1, **characterized in that** the sheet metal element (8) consists of at least one protrusion (35).

4. Device according to one of Claims 1 to 3, **characterized in that** the sensor carrier (1) has an aerodynamically shaped leading edge (16) of plastic directed counter to the flowing medium.

5. Device according to one of Claims 1 to 4, **characterized in that** provided in the plastic element (11) is a sensor cavern (3) having a sensor cavern base (6), in which the measuring element (21) is arranged, wherein the sensor cavern (3) forms a frame and holding element for the measuring element (21).

6. Device according to one of Claims 1 to 5, **characterized in that** the sensor carrier (1) is shaped or is aligned with respect to a main flow direction (15) of the flowing medium such that a vector of the main flow direction (15) lies in the plane of a sensor area of the measuring element (21) or intersects the plane of the sensor area at a small positive or negative angle.

7. Device according to Claim 5 or 6, **characterized in that** a surface (14) of the plastic element (11), in which the sensor cavern (3) is located, is located approximately at the same height as the base (4) of the basic carrier part (2).

8. Device according to Claim 5 or 7, **characterized in that** the dimensions of the sensor cavern (3) at the height of the surface (14) of the plastic element (11) correspond approximately to the dimensions of the measuring element (21), so that the measuring element (21) can be introduced flush into the sensor cavern (3) and the medium barely flows or does not flow at all under the measuring element (21) into the sensor cavern.

9. Device according to Claim 8, **characterized in that** the sensor cavern (3) has two opposite longitudinal edges (27, 27') and, between the periphery of the measuring element (21) and the longitudinal edges (27, 27'), there is formed a gap (39, 39') which has an order of magnitude of a few micrometres.

10. Device according to Claim 8 or 9, **characterized in that** the dimensions of the sensor cavern (3) correspond approximately to the dimensions of the measuring element (21), so that the measuring element (21) lies flush with the surface (14) of the plastic element (11).

11. Device according to one or more of Claims 8 to 10, **characterized in that**, a bulkhead (44) is attached to the surface (14) of the plastic element (11), outside the sensor cavern (3), in the area of one end face (9) of the sensor carrier (1).

12. Device according to one or more of Claims 8 to 11, **characterized in that** depressions (38) are introduced into an edge region of the sensor cavern base (6).

13. Device according to one or more of Claims 8 to 12, **characterized in that** the measuring element (21) is adhesively bonded to the sensor cavern base (6).

14. Device according to Claim 13, **characterized in that** in the sensor cavern base (6) there is formed at least one adhesive displacement space (19) in the form of a channel, which extends in the direction from a longitudinal edge (27) of the sensor cavern base (6) that extends parallel to the leading edge (16) of the sensor carrier (1) to an opposite longitudinal edge (27'), into which, when the measuring element (21) is inserted into the sensor cavern (3) of the sensor carrier (1), adhesive introduced into the sensor cavern (3) can escape, and which divides the sensor cavern base (6) into a contact area (22), to which the adhesive is applied, and into a sensor base area (20), which is located under a diaphragm (30) of the measuring element (21).

15. Device according to Claim 13 or 14, **characterized in that** in the two opposite longitudinal edges (27, 27') of the sensor cavern (3) that extend parallel or else at a slight angle to the leading edge (16) of the sensor carrier (1), in the area of the contact area (22), in each case a cut-out (28, 28') is made, through which an adhesive bead (29) applied therein is forced out as the measuring element (21) is inserted into the sensor cavern (3), so that a gap (39) between the measuring element (21) and the sensor cavern (3) on the one longitudinal edge (27), an adjacent gap between measuring element (21) and contact area (22) and an adjacent gap (39') on the other longitudinal edge (27) are closed completely by adhesive from the adhesive bead (29).

16. Device according to Claim 15, **characterized in that** the device has a cover (46), to which a partition (45) is connected, which extends with a free end as far as the surface (14) of the plastic element (11), and the cut-outs (28, 28') in the longitudinal edges (27, 27') of the sensor cavern (3) extend in the direction of the partition (45) and are at least partly covered by the latter.

17. Device according to one or more of Claims 8 to 16, **characterized in that** one or more spacers (26) in the form of elevations are provided in the sensor cavern base (6) of the sensor cavern (3).

18. Device according to Claim 17, **characterized in that** one or more spacers (26) in the form of elevations are provided in the region of the contact area (22) and/or the sensor base area (20).

19. Device according to one or more of the preceding claims, **characterized in that** the plastic used for the plastic element (11) is from the plastic class of liquid crystal polymers or partially crystalline aromatic thermoplastic.

20. Method for producing a device for measuring the mass of a flowing medium, in particular the intake air mass of internal combustion engines, having a sensor carrier (1), which has a sheet metal element (8) connected to a basic carrier part (2) and on which there is arranged a measuring element (21) introduced into the flowing medium, in particular according to one or more of Claims 1 to 19, **characterized in that** firstly the basic carrier part (2) having a metal strip (49) projecting from an edge (5) is produced, then, in one of the following method steps, the metal strip (49) projecting from the edge (5) of the basic carrier part (2) is machined to form the sheet metal element (8), then, in one of the following method steps for forming the sensor carrier (1), the sheet metal element (6) is fully or partly sheathed with a plastic element (11).

21. Method according to Claim 20, **characterized in that** as a method step for machining the metal strip (49), the metal strip (49) is machined in such a way that at least one opening is made in order to form the sheet metal element (8) in the form of a sheet metal frame (13).

22. Method according to Claim 20, **characterized in that** as a method step for machining the metal strip (49), the metal strip (49) is machined in such a way that at least one protrusion (35) projecting from the basic carrier part (2) is produced.

23. Method according to one of Claims 20 to 22, **characterized in that** as a method step for machining the metal strip (49), the metal strip (49) or the sheet metal element (8, 13, 34, 35) is bent along a predetermined line (43) of the basic carrier part (2) such that the surface of a base (4) of the basic carrier part (2) and the sheet metal element (8, 13, 34, 35) are offset in relation to each other and, outside the bending zone, extend parallel to each other, and the plastic element (11) is attached in such a way that a surface (14) of the plastic element (11) is located at virtually the same height as the surface of the base (4).

24. Method according to Claim 20, **characterized in that**, as a method step for producing the plastic element (11) and the connection between plastic element (11) and sheet metal element (8, 13, 34, 35), a plastic is applied to the sheet metal element (8, 13, 34, 35) by means of an appropriate method such that, following the application, it is connected to the sheet metal element (8, 13, 34, 35), the sheet metal element (8) is then laid in a shaping tool (53) and the plastic is deformed plastically into the form of the plastic element (11), finally the sensor carrier (1) formed from sheet metal element (8, 13, 34, 35) and plastic element (11) is removed from the shaping tool (53).

25. Method according to Claim 20, **characterized in that**, as a method step for producing the plastic element (11) and the connection between plastic element (11) and sheet metal element (13), the sheet metal element (8) is laid in a shaping tool (53), plastic is then introduced into the shaping tool (53) by an appropriate method and thus, firstly is connected to the sheet metal element (8, 13, 34, 35) and secondly is shaped by means of the shaping tool (53) into the form of the plastic element (11), finally the sensor carrier (1) formed from sheet metal element (8, 13, 34, 35) and plastic element (11) is removed from the shaping tool (53).

26. Method according to Claim 20, **characterized in that**, as a method step for producing the plastic element (11) and the connection between plastic element (11) and sheet metal element (8, 13, 34, 35), the plastic element (11) is made with a recess in the interior, the sheet metal element (8, 13, 34, 35) is then pushed into the recess, then the plastic element (11) and the sheet metal element (8, 13, 34, 35) are connected to each other by means of an adhesive or thermoplastic deformation.

27. Method according to Claim 20, **characterized in that**, as a method step for producing the plastic element (11) and the connection between plastic element (11) and sheet metal element (13), the plastic element (11) is made, then the plastic element (11) is laid with a surface (14) on the sheet metal element (8, 13, 34, 35) and then adhesively bonded to the latter or connected by thermoplastic deformation.

28. Method according to Claim 24, **characterized in that** in order to apply the plastic (56) to the sheet metal element (8, 13, 34, 35), methods such as whirl sintering methods or dipping methods or electrostatic powder spraying are used.

29. Method according to Claim 25, **characterized in that** a plastic injection moulding method is used to introduce plastic into the shaping tool (53).

30. Method according to Claim 24 or 25, **characterized in that** the sheet metal element (8, 13, 34, 35) is held on at least one holding surface (10) by means of at least one plunger in order to avoid bending during the application of plastic or the shaping of the plastic element (11).

31. Method according to one or more of Claims 24 to 30, **characterized in that** a bulkhead (44) is produced during the shaping of the plastic element (11) or is attached to the latter in an additional operation.

## Revendications

1. Dispositif pour mesurer la masse d'un milieu en écoulement, notamment de la masse d'air d'admission de moteurs à combustion interne, ayant un support de capteur (1) qui comporte un élément en tôle (8) relié à un support de base (2) et sur lequel est disposé un élément de mesure (21) introduit dans le milieu en écoulement, **caractérisé en ce que**, pour former le support de capteur (1), l'élément en tôle (8) est entièrement ou partiellement enrobé d'un élément en matière plastique (11) et l'élément en matière plastique (11) recouvre au moins en grande partie l'élément en tôle (8).

2. Dispositif selon la revendication 1, **caractérisé en ce que** l'élément en tôle (8) présente la forme d'un cadre (13) et **en ce qu'**une surface délimitée par le cadre en tôle (13) est fermée au moins en grande partie par l'élément en matière plastique (11).

3. Dispositif selon la revendication 1, **caractérisé en ce que** l'élément en tôle (8) est constitué d'au moins une protubérance (35).

4. Dispositif selon l'une quelconque des revendications 1 à 3, **caractérisé en ce que** le support de capteur (1) présente un bord d'attaque (16) en matière plastique de forme aérodynamique dirigé à l'opposé du milieu en écoulement.

5. Dispositif selon l'une quelconque des revendications 1 à 4, **caractérisé en ce qu'**il est prévu dans l'élément en matière plastique (11) une cuvette de capteur (3) ayant un fond de cuvette de capteur (6), dans laquelle est disposé l'élément de mesure (21), dans lequel la cuvette de capteur (3) forme un élément de cadre et de maintien pour l'élément de mesure (21).

6. Dispositif selon l'une quelconque des revendications 1 à 5, **caractérisé en ce que** le support de capteur (1) est façonné ou est orienté par rapport à une direction d'écoulement principale (15) du milieu en écoulement de manière à ce qu'un vecteur de la direction d'écoulement principale (15) se situe dans le plan d'une région de capteur de l'élément de mesure (21) ou forme avec le plan de la région de capteur un faible angle positif ou négatif.

7. Dispositif selon la revendication 5 ou 6, **caractérisé en ce qu'**une surface (14) de l'élément en matière plastique (11), dans laquelle se trouve la cuvette de capteur (3), se situe approximativement à la même hauteur que le fond (4) du support de base (2).

8. Dispositif selon la revendication 5 ou 7, **caractérisé en ce que** la cuvette de capteur (3) correspond approximativement dans ses dimensions, à la hauteur de la surface (14) de l'élément en matière plastique (11), aux dimensions de l'élément de mesure (21), de telle sorte que l'élément de mesure (21) peut être introduit de manière à affleurer dans la cuvette de capteur (3) et que le milieu ne pénètre qu'à peine ou ne pénètre pas dans la cuvette de capteur sous l'élément de mesure (21).

9. Dispositif selon la revendication 8, **caractérisé en ce que** la cuvette de capteur (3) présente deux bords longitudinaux (27, 27') opposés et **en ce qu'**un interstice (39, 39') est formé entre le périmètre de l'élément de mesure (21) et les bords longitudinaux (27, 27'), lequel interstice présente un ordre de grandeur de quelques micromètres.

10. Dispositif selon la revendication 8 ou 9, **caractérisé en ce que** la cuvette de capteur (3) correspond approximativement dans ses dimensions aux dimensions de l'élément de mesure (21), de telle sorte que l'élément de mesure (21) se situe de manière à affleurer à la surface (14) de l'élément en matière plastique (11).

11. Dispositif selon l'une ou plusieurs des revendications 8 à 10, **caractérisé en ce qu'**une paroi étanche (44) est montée sur la surface (14) de l'élément en matière plastique (11) à l'extérieur de la cuvette de capteur (3) dans la région d'une face avant (9) du support de capteur (1).

12. Dispositif selon l'une ou plusieurs des revendications 8 à 11, **caractérisé en ce que** des creux (38) sont ménagés dans une région de bord du fond de cuvette de capteur (6).

13. Dispositif selon l'une ou plusieurs des revendications 8 à 12, **caractérisé en ce que** l'élément de mesure (21) est collé sur le fond de cuvette de capteur (6).

14. Dispositif selon la revendication 13, **caractérisé en ce qu'**au moins un espace de déplacement d'adhésif (19) est réalisé dans le fond de cuvette de capteur (6) sous la forme d'un canal, qui s'étend dans la direction d'un bord longitudinal (27) du fond de cuvette de capteur (6) s'étendant parallèlement au bord d'attaque (16) du support de capteur (1) jusqu'à un bord longitudinal (27') opposé, dans lequel, lors de l'insertion de l'élément de mesure (21) dans la cuvette de capteur (3) du support de capteur (1), l'adhésif introduit dans la cuvette de capteur (3) peut se déplacer et qui divise le fond de cuvette de capteur (6) en une surface d'appui (22), sur laquelle est déposé l'adhésif, et en une surface de base de capteur (20), qui se situe sous une membrane (30) de l'élément de mesure (21).

15. Dispositif selon la revendication 13 ou 14, **caractérisé en ce qu'**un évidement respectif (28, 28') est ménagé dans la région de la surface d'appui (22), dans les deux bords longitudinaux (27, 27') opposés de la cuvette de capteur (3) s'étendant parallèlement ou de manière légèrement inclinée par rapport au bord d'attaque (16) du support de capteur (1), évidement à travers lequel est expulsé un boudin d'adhésif (29) appliqué dans celui-ci lors de l'insertion de l'élément de mesure (21) dans la cuvette de capteur (3), de manière à ce qu'un interstice (39) entre l'élément de mesure (21) et la cuvette de capteur (3) sur ledit bord longitudinal (27), un interstice se reliant à celui-ci entre l'élément de mesure (21) et la surface d'appui (22) et un interstice (39') se reliant à celui-ci sur l'autre bord longitudinal (27') soient entièrement fermés par un adhésif du boudin d'adhésif (29).

16. Dispositif selon la revendication 15, **caractérisé en ce que** le dispositif présente un couvercle (46) auquel est reliée une paroi de séparation (45) qui s'étend avec une extrémité libre jusqu'à la surface (14) de l'élément en matière plastique (11) et les évidements (28, 28') s'étendent dans les bords longitudinaux (27, 27') de la cuvette de capteur (3) dans la direction de la paroi de séparation (45) et sont au moins partiellement recouverts par celui-ci.

17. Dispositif selon l'une ou plusieurs des revendications 8 à 16, **caractérisé en ce qu'**un ou plusieurs éléments d'espacement (26) sont prévus sous la forme de protubérances dans le fond de cuvette de capteur (6) de la cuvette de capteur (3).

18. Dispositif selon la revendication 17, **caractérisé en ce qu'**un ou plusieurs éléments d'espacement (26) sont prévus sous la forme de protubérances dans la région de la surface d'appui (22) et/ou de la surface de base de capteur (20).

19. Dispositif selon l'une ou plusieurs des revendications précédentes, **caractérisé en ce qu'**on utilise en tant que matière plastique destinée à l'élément en matière plastique 11 une matière plastique appartenant à la classe de matières plastiques constituées de polymères de cristaux liquides, ou de matériaux thermoplastiques aromatiques partiellement cristallins.

20. Procédé de fabrication d'un dispositif pour mesurer la masse d'un milieu en écoulement, notamment la masse d'air d'admission de moteurs à combustion interne, ayant un support de capteur (1) qui comporte un élément en tôle (8) relié à un support de base (2) et sur lequel est disposé un élément de mesure (21) introduit dans le milieu en écoulement, notamment selon l'une ou plusieurs des revendications 1 à 19, **caractérisé en ce que** le support de base (2) est tout d'abord réalisé avec une bande métallique (49) faisant saillie par rapport à un bord (5), puis lors de l'une des étapes de procédé suivantes, la bande métallique (49) faisant saillie par rapport au bord (5) du support de base (2) est traitée pour former l'élément en tôle (8), puis l'élément en tôle (8) est entièrement ou partiellement enrobé d'un élément en matière plastique (11) lors de l'une des étapes de procédé suivantes pour former le support de capteur (1).

21. Procédé selon la revendication 20, **caractérisé en ce qu'**en tant qu'étape de procédé destinée à traiter la bande métallique (49), la bande métallique (49) est traitée de manière à ce qu'au moins une ouverture soit ménagée pour former l'élément en tôle (8) sous la forme d'un cadre en tôle (13).

22. Procédé selon la revendication 20, **caractérisé en ce qu'**en tant qu'étape de procédé destinée à traiter la bande métallique (49), la bande métallique (49) est traitée de manière à former au moins une protubérance (35) faisant saillie par rapport au support de base (2).

23. Procédé selon l'une quelconque des revendications 20 à 22, **caractérisé en ce qu'**en tant qu'étape de procédé destinée à traiter la bande métallique (49), la bande métallique (49) ou l'élément en tôle (8, 13, 34, 35) est incurvé le long d'une ligne prédéterminée (43) du support de base (2) de manière à ce que les surfaces d'un fond (4) du support de base (2) et de l'élément en tôle (8, 13, 34, 35) soient décalées l'une par rapport à l'autre et s'étendent parallèlement l'une à l'autre à l'extérieur de la zone de courbure, et **en ce que** l'élément en matière plastique (11) est monté de manière à ce qu'une surface (14) de l'élément en matière plastique (11) se situe pratiquement à la même hauteur que la surface du fond (4).

24. Procédé selon la revendication 20, **caractérisé en ce qu'**en tant qu'étape de procédé pour la fabrication de l'élément en matière plastique (11) et pour la liaison entre l'élément en matière plastique (11) et l'élément en tôle (8, 13, 34, 35), une matière plastique est déposée par un procédé correspondant sur l'élément en tôle (8, 13, 34, 35) de manière à ce qu'elle soit reliée à l'élément en tôle (8, 13, 34, 35) après son application, puis l'élément en tôle (8) est mis en place dans un outil de façonnage (53) et la matière plastique est façonnée plastiquement sous la forme de l'élément en matière plastique (11), et enfin, le support de capteur (1) formé de l'élément en tôle (8, 13, 34, 35) et de l'élément en matière plastique (11) est sorti de l'outil de façonnage (53).

25. Procédé selon la revendication 20, **caractérisé en ce qu'**en tant qu'étape de procédé pour la fabrication de l'élément en matière plastique (11) et pour la liaison entre l'élément en matière plastique (11) et l'élément en tôle (13), l'élément en tôle (8) est mis en place dans un outil de façonnage (53), puis de la matière plastique est introduite par un procédé correspondant dans l'outil de façonnage (53) et est ainsi d'une part liée à l'élément en tôle (8, 13, 34, 35) et d'autre part est façonnée au moyen de l'outil de façonnage (53) sous la forme de l'élément en matière plastique (11), et enfin, le support de capteur (1) formé de l'élément en tôle (8, 13, 34, 35) et de l'élément en matière plastique (11) est sorti de l'outil de façonnage (53).

26. Procédé selon la revendication 20, **caractérisé en ce qu'**en tant qu'étape de procédé pour la fabrication de l'élément en matière plastique (11) et pour la liaison entre l'élément en matière plastique (11) et l'élément en tôle (8, 13, 34, 35), l'élément en matière plastique (11) est réalisé avec une cavité intérieure, puis l'élément en tôle (8, 13, 34, 35) est glissé dans la cavité, puis l'élément en matière plastique (11) et l'élément en tôle (8, 13, 34, 35) sont reliés l'un à l'autre au moyen d'un adhésif ou par déformation thermoplastique.

27. Procédé selon la revendication 20, **caractérisé en ce qu'**en tant qu'étape de procédé pour la fabrication de l'élément en matière plastique (11) et pour la liaison entre l'élément en matière plastique (11) et l'élément en tôle (13), l'élément en matière plastique (11) est réalisé, puis l'élément en matière plastique (11) est placé avec une surface (14) sur l'élément en tôle (8, 13, 34, 35), et enfin, est collé à celui-ci ou y est lié par déformation thermoplastique.

28. Procédé selon la revendication 24, **caractérisé en ce que** pour, appliquer la matière plastique (56) sur l'élément en tôle (8, 13, 34, 35), on utilise des procédés tels que des procédés de frittage à lit fluidisé ou des procédés par immersion ou des projections de poudres électrostatiques.

29. Procédé selon la revendication 25, **caractérisé en ce que**, pour l'introduction de matière plastique dans l'outil de façonnage (53), on utilise un procédé d'injection de matière plastiques.

30. Procédé selon la revendication 24 ou 25, **caractérisé en ce que** l'élément en tôle (8, 13, 34, 35) est maintenu sur au moins une surface de maintien (10) par au moins un poinçon pour éviter une flexion pendant le dépôt de matière plastique ou pendant le façonnage de l'élément en matière plastique (11).

31. Procédé selon l'une ou plusieurs des revendications 24 à 30, **caractérisé en ce qu'**une paroi étanche (44) est réalisée pendant le façonnage de l'élément en matière plastique (11) ou est montée sur celui-ci par une étape de travail supplémentaire.
